# EUROPEAN PATENT APPLICATION

(11) **EP 4 477 510 A1**
(43) Date of publication of application: **18.12.2024**
(21) Application number: 24180517.5
(22) Date of filing: 06.06.2024
(51) Int. Cl.: B62J 6/055, B62J 17/02

(54) **SUPPORT STRUCTURE FOR TURN SIGNAL LAMP**

(30) Priority: 07.06.2023 JP 2023093710
(71) Applicant: Suzuki Motor Corporation, Shizuoka 432-8611 (JP)
(72) Inventor: YOSHIURA, Toshiaki, Shizuoka, 432-8611 (JP)
(74) Representative: Haseltine Lake Kempner LLP

(57) **Abstract**

A support structure for a turn signal lamp provided on a straddle-type vehicle includes: a first side cowling having a cutout formed in a part of the first side cowling; and a second side cowling configured to cover the cutout from an inner side. The second side cowling is configured to support the turn signal lamp extending outward through the cutout. An outer side surface of the second side cowling is attached to an inner side surface of the first side cowling so as to be detachable in a vehicle width direction.

## Description

### TECHNICAL FIELD

The present disclosure relates to a support structure for a turn signal lamp.

### BACKGROUND ART

As described, for example, in Patent Literature 1, in a straddle-type vehicle, a turn signal lamp is fixed to a side surface of a cowling via a rubber lamp stay. The lamp stay is formed in a cup shape in cross-sectional view, and an opening edge of the lamp stay is attached to the cowling with a bottom wall of the lamp stay facing outward in a vehicle width direction. The turn signal lamp is screwed to the bottom wall of the lamp stay. When an external force acts on the lamp stay from a side due to turnover or the like, a buckling that causes the lamp stay to bend occurs, and an external force applied to the turn signal lamp is effectively released.

Patent Literature 1: JP2014-012523A

### SUMMARY OF INVENTION

In the turn signal lamp described in Patent Literature 1, a risk of breakage is reduced by a deformation of the lamp stay. However, in recent years, there is a need to increase a support rigidity of a turn signal lamp so as to reduce a shaking of the turn signal lamp and improve a marketability.

The present disclosure has been made in view of the above circumstances, and an object thereof is to provide a support structure for a turn signal lamp, which can reduce a risk of breakage of the turn signal lamp while reducing a shaking of the turn signal lamp.

An aspect of the present disclosure provides a support structure for a turn signal lamp provided on a straddle-type vehicle, the support structure including: a first side cowling having a cutout formed in a part of the first side cowling; and a second side cowling configured to cover the cutout from an inner side, in which: the second side cowling is configured to support the turn signal lamp extending outward through the cutout; and an outer side surface of the second side cowling is attached to an inner side surface of the first side cowling so as to be detachable in a vehicle width direction.

According to the support structure for a turn signal lamp of an aspect of the present disclosure, the turn signal lamp is fixed to the second side cowling, whereby a support rigidity is increased and a shaking of the turn signal lamp is reduced. In addition, when the turn signal lamp hits the ground due to turnover or the like, an external force acts on the turn signal lamp inward in the vehicle width direction. The external force is transmitted from the turn signal lamp to the second side cowling, and the second side cowling is detached from the first side cowling, thereby reducing an impact on the turn signal lamp. Therefore, it is possible to reduce a risk of breakage of the turn signal lamp while reducing the shaking of the turn signal lamp and improving a marketability.

### BRIEF DESCRIPTION OF DRAWINGS

The present disclosure will be described in detail based on the following without being limited thereto, wherein:
FIG. 1 is a side view of a front half portion of a straddle-type vehicle of the present embodiment;
FIG. 2 is a side view of the periphery of a side cowling of the present embodiment;
FIG. 3 is a side view of the side cowling of the present embodiment as viewed from the inside;
FIG. 4 is a cross-sectional view of the side cowling of FIG. 2 taken along a line A-A;
FIG. 5 is a side view of the periphery of a turn signal lamp of the present embodiment;
FIG. 6 is a front view of the straddle-type vehicle of the present embodiment when the vehicle is turned over at the time of being stopped;
FIG. 7 is a side view of the straddle-type vehicle of the present embodiment when the vehicle is turned over during traveling; and
FIG. 8 is a side view of a second side cowling of the present embodiment when the vehicle is turned over during traveling.

### DESCRIPTION OF EMBODIMENTS

A straddle-type vehicle according to an aspect of the present disclosure includes a support structure for a turn signal lamp. The straddle-type vehicle includes a first side cowling and a second side cowling, a cutout is formed in a part of the first side cowling, and the cutout is covered with the second side cowling from the inside. The turn signal lamp extending outward through the cutout is supported on the second side cowling. An outer side surface of the second side cowling is attached to an inner side surface of the first side cowling so as to be able to be inserted and removed in a vehicle width direction. The turn signal lamp is fixed to the second side cowling, and thus a support rigidity is increased and a shaking of the turn signal lamp is reduced. In addition, when the turn signal lamp hits the ground due to turnover or the like, an external force acts on the turn signal lamp inward in the vehicle width direction. The external force is transmitted from the turn signal lamp to the second side cowling, and the second side cowling is detached from the first side cowling, thereby reducing an impact on the turn signal lamp. Therefore, it is possible to reduce a risk of breakage of the turn signal lamp while reducing the shaking of the turn signal lamp and improving a marketability.

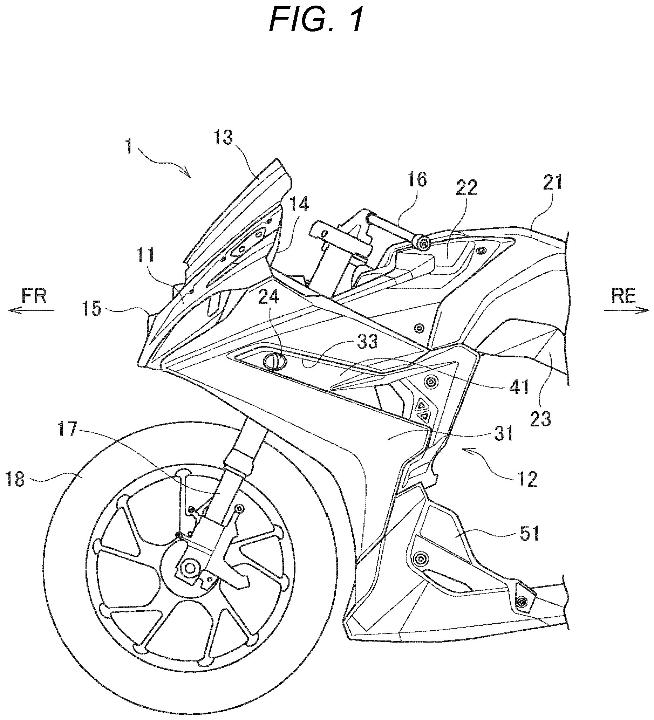

Hereinafter, a straddle-type vehicle according to the present embodiment will be described with reference to the accompanying drawings. FIG. 1 is a side view of a front half portion of the straddle-type vehicle of the present embodiment. In the following drawings, an arrow FR indicates a vehicle front side, an arrow RE indicates a vehicle rear side, an arrow L indicates a vehicle left side, and an arrow R indicates a vehicle right side.

As shown in FIG. 1, a front cowling 11 and a pair of side cowlings 12 are provided at a vehicle front portion of a straddle-type vehicle 1. The vehicle front portion is covered with the front cowling 11 from a front side, and the vehicle front portion is covered with the pair of side cowlings 12 from lateral sides. A wind screen 13 for wind protection is attached to an upper side of a front surface of the front cowling 11, and a meter cover 14 is attached to a rear side of the front cowling 11. The front cowling 11 is provided with two upper and lower headlights 15 inside, and a lens of the headlight 15 is exposed from the front surface of the front cowling 11.

An upper half portion of the side cowling 12 is formed by a first side cowling 31 and a second side cowling 41, and a lower half portion of the side cowling 12 is formed by a third side cowling 51. A cutout 33 is formed in a part of the first side cowling 31, the second side cowling 41 is attached to the inside of the first side cowling 31, and the cutout 33 is covered with the second side cowling 41 from the inside. The third side cowling 51 is connected to lower sides of the first side cowling 31 and the second side cowling 41, and an engine (not shown) is covered with the first to third side cowlings 31, 41, and 51 from the front.

The first side cowling 31 is provided with a handle 16 on an upper side thereof, and a front wheel 18 is supported on the lower side of the first side cowling 31 via a front fork 17. A fuel tank 21 with a tank cover 22 is disposed above the first side cowling 31 and the second side cowling 41, and a main frame 23 extends rearward from the fuel tank 21. The second side cowling 41 is exposed from the cutout 33 of the first side cowling 31, and a turn signal lamp 24 extending outward through the cutout 33 of the first side cowling 31 is supported at an exposed portion of the second side cowling 41.

In a general straddle-type vehicle, a turn signal lamp protrudes laterally from a vehicle body, and thus a structure for releasing an impact on the turn signal lamp at the time of turnover has been studied. In this case, a support structure for a turn signal lamp is formed of a soft elastic material such as rubber, and thus the soft elastic material absorbs the impact at the time of turnover to reduce the breakage of the turn signal lamp, but a support rigidity of the turn signal lamp decreases and a shaking of the turn signal lamp during traveling increases. On the other hand, by increasing the support rigidity of the turn signal lamp, the shaking of the turn signal lamp during traveling is reduced, but the impact at the time of turnover cannot be released.

As described above, in the general support structure for the turn signal lamp, a degree of shaking of the turn signal lamp during traveling and an impact absorption property on the turn signal lamp are in a tread-off relation. Therefore, in the present embodiment, the turn signal lamp 24 is fixed to the second side cowling 41, and the support rigidity is secured to such an extent that the shaking of the turn signal lamp 24 during traveling is reduced. In addition, the second side cowling 41 is attached to the first side cowling 31 such that the second side cowling 41 is detached from the first side cowling 31 at the time of turnover, thereby reducing the impact on the turn signal lamp 24.

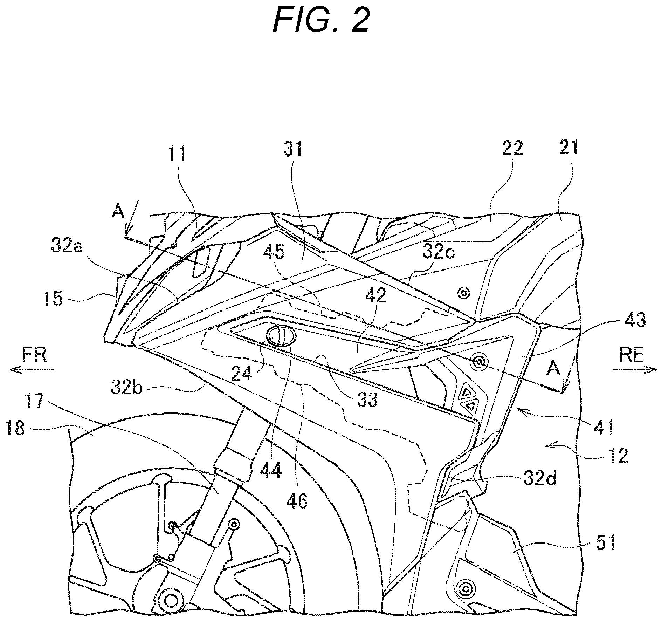

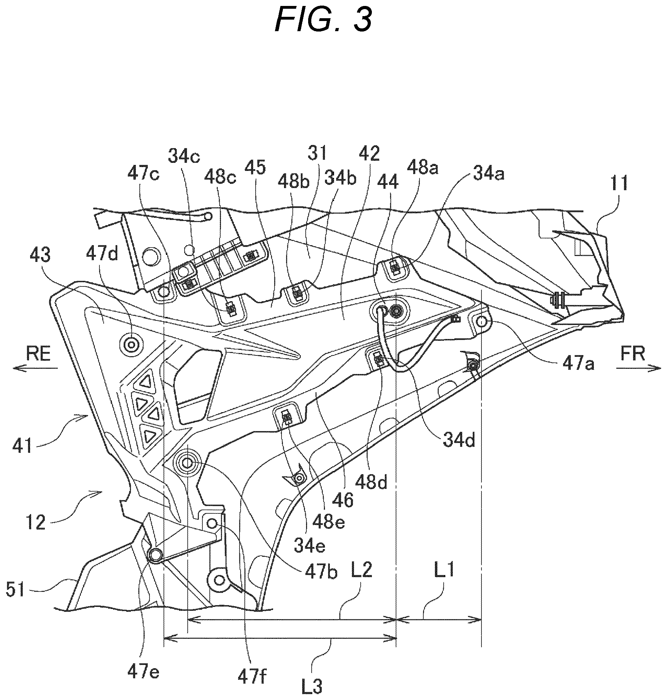

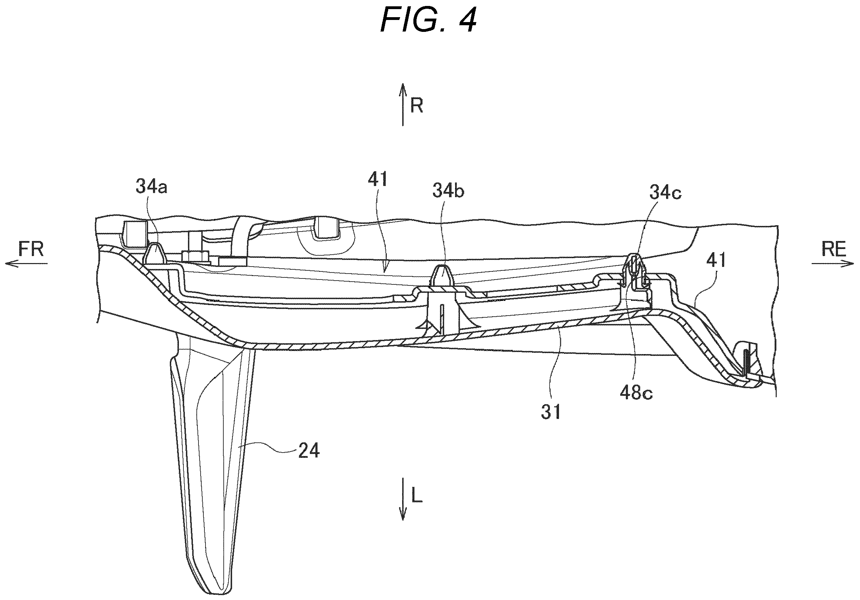

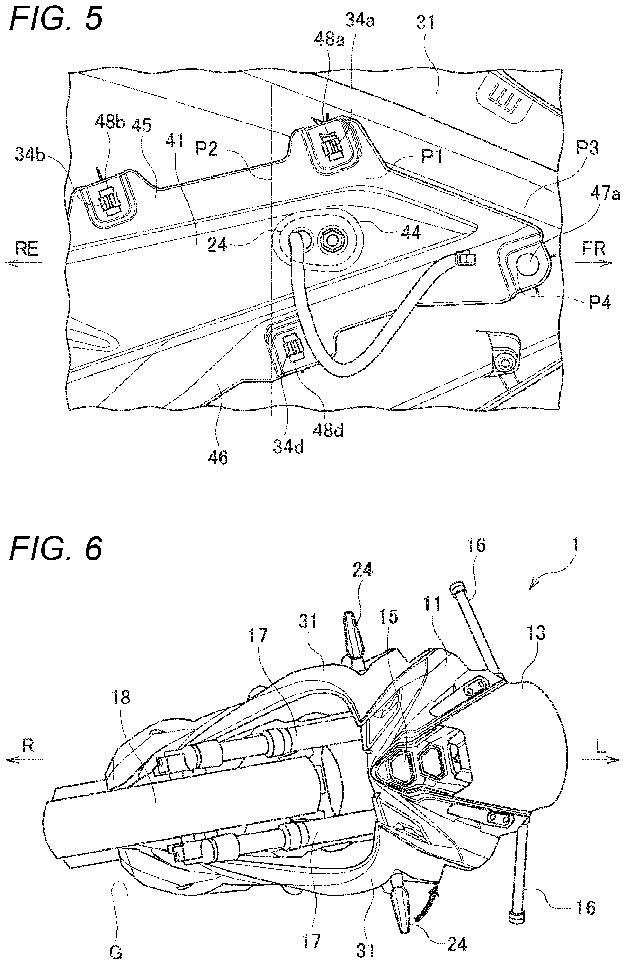

The support structure for the turn signal lamp according to the present embodiment will be described with reference to FIGS. 2 to 5. FIG. 2 is a side view of the periphery of a side cowling of the present embodiment. FIG. 3 is a side view of the side cowling of the present embodiment as viewed from the inside. FIG. 4 is a cross-sectional view of the side cowling of FIG. 2 taken along a line A-A. FIG. 5 is a side view of the periphery of the turn signal lamp of the present embodiment.

As shown in FIGS. 2 and 3, a front edge of the first side cowling 31 is bent by an oblique edge 32a extending obliquely forward and downward from an upper end of the first side cowling 31 and an oblique edge 32b extending obliquely forward and upward from a lower end of the first side cowling 31. A rear edge of the first side cowling 31 is cut out to be divided into an oblique edge 32c extending obliquely rearward and downward from the upper end of the first side cowling 31 and an oblique edge 32d extending obliquely rearward and upward from the lower end of the first side cowling 31. The cutout 33 extends forward from the rear edge of the first side cowling 31, and the second side cowling 41 is exposed by the cutout 33.

The second side cowling 41 is formed of a flexible resin, and includes a cover portion 42 extending in a front-rear direction so as to overlap the cutout 33, and a connection portion 43 extending in an up-down direction so as to connect the divided rear edges of the first side cowling 31. A support surface 44 exposed from the cutout 33 is formed on a front end side of the cover portion 42, and the turn signal lamp 24 extending outward through the cutout 33 is supported on the support surface 44. An upper flange 45 is formed along an upper edge of the cutout 33 from a tip of the cover portion 42 toward an upper side of a front edge of the connection portion 43, and a lower flange 46 is formed along a lower edge of the cutout 33 from the tip of the cover portion 42 toward a lower side of the front edge of the connection portion 43.

A first fixing portion (front fixing portion) 47a is formed on a front end portion of the lower flange 46, a second fixing portion (rear fixing portion) 47b is formed on a rear end portion of the lower flange 46, and a third fixing portion (rear fixing portion) 47c is formed on a rear end portion of the upper flange 45. The first to third fixing portions 47a to 47c are screwed to the first side cowling 31 from the inside. The connection portion 43 is formed with a fourth fixing portion 47d on an upper side thereof, and the fourth fixing portion 47d is screwed to the fuel tank 21 from the outside. A fifth fixing portion 47e and a sixth fixing portion 47f are formed at a lower end portion of the connection portion 43, and the fifth fixing portion 47e and the sixth fixing portion 47f are screwed to the third side cowling 51 from the inside.

In a side view, the upper flange 45 between the first fixing portion 47a and the third fixing portion 47c is formed with openings 48a to 48c, and the lower flange 46 between the first fixing portion 47a and the second fixing portion 47b is formed with openings 48d and 48e. The first side cowling 31 is formed with protrusions 34a to 34e corresponding to the openings 48a to 48e of the second side cowling 41 on an inner side surface thereof. The protrusions 34a to 34e are disengaged or escape from the openings 48a to 48e upon receiving an external force from the outside in the vehicle width direction. An outer side surface of the second side cowling 41 is attached to the inner side surface of the first side cowling 31 so as to be able to be inserted and removed in the vehicle width direction by the openings 48a to 48e and the protrusions 34a to 34e.

As shown in FIGS. 3 and 4, the protrusions 34a to 34e (only the protrusions 34a to 34c are shown in FIG. 4) protruding from the inner side surface of the first side cowling 31 are inserted into the openings 48a to 48e (only the opening 48c is shown in FIG. 4) of the second side cowling 41. The protrusions 34a to 34e are provided with inverted U-shaped hooking surfaces at respective tip portions thereof, and the hooking surfaces enter the inside of the second side cowling 41 through the openings 48a to 48e. A width dimension of the hooking surfaces of the protrusions 34a to 34e is larger than an opening width of the openings 48a to 48e, and thus the second side cowling 41 is hooked on the first side cowling 31.

The hooking surfaces of the protrusions 34a to 34e are expandable and contractible by elastic deformation in a width direction. When an external force inward in the vehicle width direction acts on the second side cowling 41, opening edges of the openings 48a to 48e move while contracting the hooking surfaces of the protrusions 34a to 34e in the width direction, and the protrusions 34a to 34e are relatively disengaged from the openings 48a to 48e. Therefore, when the second side cowling 41 (turn signal lamp 24) receives an external force, the second side cowling 41 is partially detached from the first side cowling 31, and the second side cowling 41 can be bent.

As described above, the second side cowling 41 is fixed to the first side cowling 31 by the front and rear first to third fixing portions 47a to 47c, and the second side cowling 41 is attached to the first side cowling 31 so as to be able to be inserted and removed between the first fixing portion 47a and the second and third fixing portions 47b and 47c. The second side cowling 41 is integrated with the first side cowling 31 during traveling, and thus the rattling of the second side cowling 41 is reduced, and the shaking of the turn signal lamp 24 is reduced. The second side cowling 41 is detached from the first side cowling 31 and is bent between the first fixing portion 47a and the second and third fixing portions 47b and 47c at the time of turnover, whereby the impact on the turn signal lamp 24 is reduced.

Further, in the second side cowling 41, distances L2 and L3 from the support surface 44 to the second and third fixing portions 47b and 47c are larger than a distance L1 from the support surface 44 to the first fixing portion 47a. Therefore, the second side cowling 41 is more likely to be bent between the support surface 44 and the second and third fixing portions 47b and 47c than between the support surface 44 and the first fixing portion 47a. The external force inward in the vehicle width direction and an external force on the vehicle rear side act on the turn signal lamp 24 at the time of turnover during traveling, but the second side cowling 41 is largely bent in a rear part relative to the turn signal lamp 24, whereby the impact on the turn signal lamp 24 is effectively reduced.

As shown in FIG. 5, the turn signal lamp 24 is supported on the support surface 44 of the second side cowling 41. The openings 48a to 48e (only the openings 48a, 48b, and 48d are shown in FIG. 5) are formed at attaching locations of the outer side surface of the second side cowling 41 with respect to the inner side surface of the first side cowling 31. In the side view, the openings 48a and 48d of the second side cowling 41 are located on a rear side of a front end position P1 of the support surface 44 and on a front side of a rear end position P2 of the support surface 44. The second side cowling 41 is attached to the first side cowling 31 at a position close to the front and rear of the turn signal lamp 24, and thus the shaking or the like in a vicinity of the turn signal lamp 24 is effectively reduced.

The opening 48a of the second side cowling 41 is located above an upper end position P3 of the support surface 44. The second side cowling 41 is attached to the first side cowling 31 above the turn signal lamp 24, and thus the shaking of the turn signal lamp 24 is reduced during traveling, and the protrusion 34a is disengaged from the opening 48a and an upper side of the second side cowling 41 is likely to be detached at the time of turnover. When the vehicle is turned over at the time of being stopped due to falling or the like, an external force acting upward on the turn signal lamp 24 is large, but the impact on the turn signal lamp 24 is reduced by bending the upper side of the second side cowling 41.

The opening 48d of the second side cowling 41 is located below a lower end position P4 of the support surface 44. The openings 48a and 48d are located above and below the turn signal lamp 24, and the second side cowling 41 is attached to the first side cowling 31 at a position at which the turn signal lamp 24 is vertically sandwiched, and thus the shaking in the vicinity of the turn signal lamp 24 is effectively reduced. A part of the first fixing portion 47a of the second side cowling 41 is located below the upper end position P3 and above the lower end position P4 of the support surface 44. The first fixing portion 47a is located at substantially the same height as the turn signal lamp 24, and thus a vertical shaking or wear of the turn signal lamp 24 is reduced.

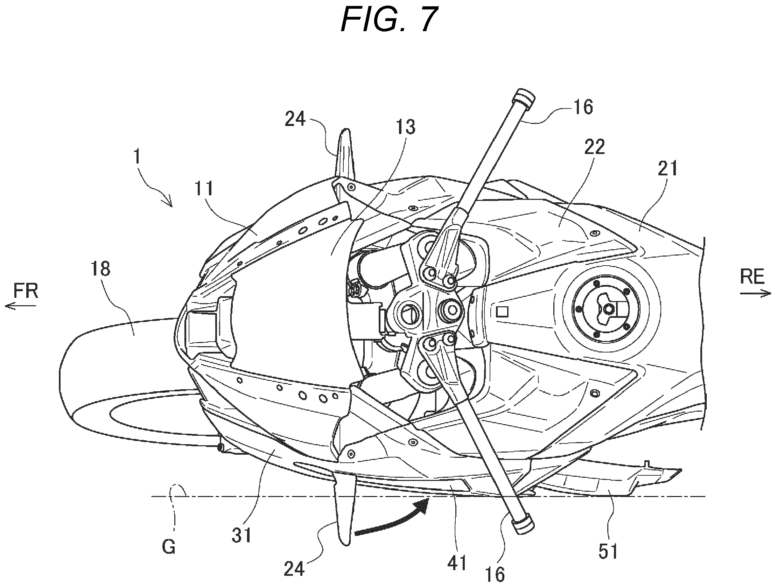

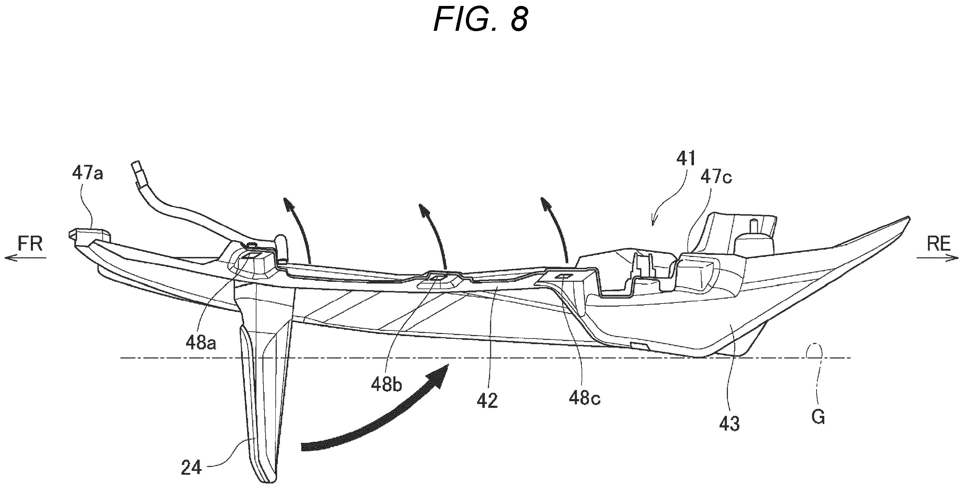

Next, the impact absorption of the turn signal lamp will be described with reference to FIGS. 6 to 8. FIG. 6 is a front view of the straddle-type vehicle of the present embodiment when the vehicle is turned over at the time of being stopped. FIG. 7 is a side view of the straddle-type vehicle of the present embodiment when the vehicle is turned over during traveling. FIG. 8 is a side view of the second side cowling of the present embodiment when the vehicle is turned over during traveling.

As shown in FIG. 6, when the straddle-type vehicle 1 is turned over at the time of being stopped due to falling or the like, the turn signal lamp 24 protruding laterally from the vehicle body hits a ground G. An upward rotating external force is applied to the turn signal lamp 24, and an external force acts on the turn signal lamp 24 not only inward in the vehicle width direction but also upward in a vehicle body direction. The upper side of the second side cowling 41 (see FIG. 3) is pushed in via the turn signal lamp 24, and the openings 48a to 48c (see FIG. 3) of the second side cowling 41 are disengaged from the protrusions 34a to 34c of the first side cowling 31. The upper side of the second side cowling 41 is bent inward in the vehicle width direction, and the impact on the turn signal lamp 24 is reduced.

As shown in FIG. 7, when the straddle-type vehicle 1 is turned over during traveling, the turn signal lamp 24 hits the ground G while the straddle-type vehicle 1 slides forward. A rearward rotating external force is applied to the turn signal lamp 24, and an external force acts on the turn signal lamp 24 not only inward in the vehicle width direction but also rearward in the vehicle body direction. A rear side of the second side cowling 41 is pushed in via the turn signal lamp 24, and the openings 48a to 48e (see FIG. 3) of the second side cowling 41 are disengaged from the protrusions 34a to 34e of the first side cowling 31. The rear side of the second side cowling 41 is bent inward in the vehicle width direction, and the impact on the turn signal lamp 24 is reduced.

More specifically, as shown in FIG. 8, the cover portion 42 of the second side cowling 41 is curved so as to bulge outward in the vehicle width direction between the first fixing portion 47a and the second and third fixing portions 47b and 47c (only the third fixing portion 47c is shown in FIG. 8). When the rearward rotating external force is applied to the turn signal lamp 24, a stress is concentrated on a curved inner side surface of the second side cowling 41. When the external force is transmitted from the turn signal lamp 24 to the second side cowling 41, a stress is concentrated on the inner side surface of the second side cowling 41, and the second side cowling 41 is likely to be bent inward in the vehicle width direction. Therefore, the protrusions 34a to 34e are disengaged from the openings 48a to 48e, whereby the second side cowling 41 can be largely bent inward in the vehicle width direction.

As described above, according to the support structure for the turn signal lamp 24 of the present embodiment, the turn signal lamp 24 is fixed to the second side cowling 41, whereby the support rigidity is increased and the shaking of the turn signal lamp 24 is reduced. In addition, when the turn signal lamp 24 hits the ground G due to turnover or the like, an external force inward in the vehicle width direction acts on the turn signal lamp 24. The external force is transmitted from the turn signal lamp 24 to the second side cowling 41, and the second side cowling 41 is detached from the first side cowling 31, thereby reducing an impact on the turn signal lamp 24. Therefore, it is possible to reduce a risk of breakage of the turn signal lamp 24 while reducing the shaking of the turn signal lamp 24 and improving a marketability.

In the present embodiment, the first side cowling is formed with the protrusions, and the second side cowling is formed with the openings. The first side cowling may be formed with the openings, and the second side cowling may be formed with the protrusions. Furthermore, an attaching structure of the first side cowling and the second side cowling is not particularly limited as long as the inner side surface of the first side cowling is attached to the outer side surface of the second side cowling so as to be able to be inserted and removed in the vehicle width direction.

In the present embodiment, the rear edge of the first side cowling is cut out, but a position of the cutout of the first side cowling is not particularly limited. It is only necessary that a part of the first side cowling is cut out, and for example, a center portion of the first side cowling may be cut out and opened. That is, the cutout includes not only a shape obtained by removing an edge of the first side cowling but also an opening shape obtained by removing a center of the first side cowling.

In the present embodiment, the attaching locations of the outer side surface of the second side cowling with respect to the inner side surface of the first side cowling are located above and below the support surface supporting the turn signal lamp, and a positional relation between the support surface and the attaching locations is not particularly limited.

In the present embodiment, the second side cowling is fixed to the first side cowling, the third side cowling, and the fuel tank by the respective fixing portions, that is, the front fixing portion and the rear fixing portions, and a fixing portion of the second side cowling is not particularly limited. The second side cowling may be fixed to the vehicle body by the front fixing portion and the rear fixing portion.

The support structure for the turn signal lamp of the straddle-type vehicle according to the present embodiment is not limited to the above straddle-type vehicle, and may be adopted in other types of straddle-type vehicles. The straddle-type vehicle is not limited to a general vehicle in which a driver rides on a seat in a posture of straddling the seat, and includes a scooter-type vehicle in which the driver rides on the seat without straddling the seat.

As described above, a first aspect is a support structure for a turn signal lamp (24) provided on a straddle-type vehicle (1), and the support structure includes: a first side cowling (31) having a cutout (33) formed in a part of the first side cowling; and a second side cowling (41) configured to cover the cutout from an inner side, in which: the second side cowling is configured to support the turn signal lamp extending outward through the cutout; and an outer side surface of the second side cowling is attached to an inner side surface of the first side cowling so as to be detachable in a vehicle width direction. According to the configuration, the turn signal lamp is fixed to the second side cowling, whereby a support rigidity is increased and a shaking of the turn signal lamp is reduced. In addition, when the turn signal lamp hits the ground due to turnover or the like, an external force acts on the turn signal lamp inward in the vehicle width direction. The external force is transmitted from the turn signal lamp to the second side cowling, and the second side cowling is detached from the first side cowling, thereby reducing an impact on the turn signal lamp. Therefore, it is possible to reduce a risk of breakage of the turn signal lamp while reducing the shaking of the turn signal lamp and improving a marketability.

In a second aspect according to the first aspect, one of the first side cowling and the second side cowling has an opening (48a to 48e), the other one of the first side cowling and the second side cowling includes a protrusion (34a to 34e) inserted into the opening so as to escape from the opening upon receiving an external force from an outside in the vehicle width direction, and the outer side surface of the second side cowling is attached to the inner side surface of the first side cowling by the opening and the protrusion so as to be detachable in the vehicle width direction. According to the configuration, the second side cowling can be detached from the first side cowling upon receiving an external force from the outside in the vehicle width direction.

In a third aspect according to the first aspect and the second aspect, the second side cowling includes a support surface (44) exposed from the cutout, the turn signal lamp extending outward through the cutout is supported on the support surface, and in a side view, at least one attaching location of the outer side surface of the second side cowling with respect to the inner side surface of the first side cowling is located on a rear side of a front end position (P 1) of the support surface and on a front side of a rear end position (P2) of the support surface. According to the configuration, the second side cowling is attached to the first side cowling at a position close to the front and rear of the turn signal lamp, and thus the shaking or the like in a vicinity of the turn signal lamp is effectively reduced.

In a fourth aspect according to the third aspect, the at least one attaching location includes an attaching location located above an upper end position (P3) of the support surface in the side view. According to the configuration, the second side cowling is attached to the first side cowling above the turn signal lamp, and an upper side of the second side cowling is likely to be detached from the first side cowling when the vehicle is turned over. When the vehicle is turned over at the time of being stopped due to falling or the like, an external force acting upward on the turn signal lamp is large, but the impact on the turn signal lamp is reduced by bending the upper side of the second side cowling.

In a fifth aspect according to the fourth aspect, the at least one other attaching location includes another attaching location located below a lower end position (P4) of the support surface in the side view. According to the configuration, the second side cowling is attached to the first side cowling at a position at which the turn signal lamp is vertically sandwiched, and thus it is possible to more effectively reduce the shaking or the like in the vicinity of the turn signal lamp.

In a sixth aspect according to any one of the first to fifth aspects, the second side cowling includes a front fixing portion (first fixing portion 47a) and a rear fixing portion (second fixing portion 47b and third fixing portion 47c), the front fixing portion and the rear fixing portion being configured to be fixed to a vehicle body, and the second side cowling is detachably attached to the first side cowling between the front fixing portion and the rear fixing portion in the side view. According to the configuration, the second side cowling is integrated with the first side cowling during traveling, and thus the rattling of the second side cowling is reduced, and the shaking of the turn signal lamp is reduced. The second side cowling is detached from the first side cowling and is bent between the front fixing portion and the rear fixing portion at the time of turnover, whereby the impact on the turn signal lamp is reduced.

In a seventh aspect according to the sixth aspect, the second side cowling is formed with a support surface exposed from the cutout, the turn signal lamp extending outward through the cutout is supported on the support surface, and a distance (L2 and L3) from the support surface to the rear fixing portion is larger than a distance (L 1) from the support surface to the front fixing portion. According to the configuration, the second side cowling is more likely to be bent between the support surface and the rear fixing portion than between the support surface and the front fixing portion. The external force inward in the vehicle width direction and an external force on a vehicle rear side act on the turn signal lamp at the time of turnover during traveling, but the second side cowling is largely bent in a rear part relative to the turn signal lamp, whereby the impact on the turn signal lamp is effectively reduced.

In an eighth aspect according to the sixth aspect or the seventh aspect, a portion of the second side cowling between the front fixing portion and the rear fixing portion is curved so as to bulge outward in the vehicle width direction. According to the configuration, when the external force inward in the vehicle width direction acts on the turn signal lamp, the second side cowling is likely to be bent inward in the vehicle width direction, whereby the impact on the turn signal lamp is effectively reduced.

In a ninth aspect according to any one of the sixth aspect and the eighth aspect, the second side cowling includes a support surface exposed from the cutout, the turn signal lamp extending outward through the cutout is supported on the support surface, and a part of the front fixing portion is located below an upper end position of the support surface and above a lower end position of the support surface. According to the configuration, the front fixing portion is located at substantially the same height as the turn signal lamp, whereby the turn signal lamp is less likely to be shaken up and down, and wear or the like is reduced.

Although the present embodiment has been described, other embodiments may be used in which the above embodiment and modification are combined entirely or partially.

The technique according to the present disclosure is not limited to the above embodiment, and may be variously changed, replaced, or modified without departing from the gist of the technical concept. Further, the present disclosure may be implemented by other methods as long as the technical concept can be implemented by the methods through advance of the technique or other derivative techniques. Therefore, the claims cover all embodiments that may fall within the scope of the technical concept.

## Claims

1. A support structure for a turn signal lamp (24) provided on a straddle-type vehicle (1), the support structure comprising:
a first side cowling (31) having a cutout (33) formed in a part of the first side cowling (31); and
a second side cowling (41) configured to cover the cutout (33) from an inner side,
wherein the second side cowling (41) is configured to support the turn signal lamp (24) extending outward through the cutout (33), and
wherein an outer side surface of the second side cowling (41) is attached to an inner side surface of the first side cowling (31) so as to be detachable in a vehicle width direction.

2. The support structure according to claim 1,
wherein one of the first side cowling (31) and the second side cowling (41) has an opening (48a, 48b, 48c, 48d, 48e), and the other of the first side cowling (31) and the second side cowling (41) comprises a protrusion (34a, 34b, 34c, 34d, 34e) inserted into the opening (48a, 48b, 48c, 48d, 48e) so as to escape from the opening (48a, 48b, 48c, 48d, 48e) upon receiving an external force from an outside in the vehicle width direction, and
wherein the outer side surface of the second side cowling (41) is attached to the inner side surface of the first side cowling (31) by the opening (48a, 48b, 48c, 48d, 48e) and the protrusion (34a, 34b, 34c, 34d, 34e) so as to be detachable in the vehicle width direction.

3. The support structure according to claim 1 or 2,
wherein the second side cowling (41) comprises a support surface (44) exposed from the cutout (33), and the turn signal lamp (24) extending outward through the cutout (33) is supported on the support surface (44), and
wherein in a side view, at least one attaching location of the outer side surface of the second side cowling (41) with respect to the inner side surface of the first side cowling (31) is located on a rear side of a front end position (P 1) of the support surface (44) and on a front side of a rear end position (P2) of the support surface (44).

4. The support structure according to claim 3,
wherein the at least one attaching location comprises an attaching location located above an upper end position (P3) of the support surface (44) in the side view.

5. The support structure according to claim 4,
wherein the at least one attaching location comprises another attaching location located below a lower end position (P4) of the support surface (44) in the side view.

6. The support structure according to claim 1 or 2,
wherein the second side cowling (41) comprises a front fixing portion (47a) and a rear fixing portion (47b, 47c), the front fixing portion (47a) and the rear fixing portion (47b, 47c) being configured to be fixed to a vehicle body, and
wherein the second side cowling (41) is detachably attached to the first side cowling (31) between the front fixing portion (47a) and the rear fixing portion (47b, 47c) in a side view.

7. The support structure according to claim 6,
wherein the second side cowling (41) comprises a support surface (44) exposed from the cutout (33), and the turn signal lamp (24) extending outward through the cutout (33) is supported on the support surface (44), and
wherein a distance (L2, L3) from the support surface (44) to the rear fixing portion (47b, 47c) is larger than a distance (L1) from the support surface (44) to the front fixing portion (47a).

8. The support structure according to claim 6,
wherein a portion of the second side cowling (41) between the front fixing portion (47a) and the rear fixing portion (47b, 47c) is curved so as to bulge outward in the vehicle width direction.

9. The support structure according to claim 6,
wherein the second side cowling (41) comprises a support surface (44) exposed from the cutout (33), and the turn signal lamp (24) extending outward through the cutout (33) is supported on the support surface (44), and
wherein a part of the front fixing portion (47a) is located below an upper end position (P3) of the support surface (44) and above a lower end position (P4) of the support surface (44).
